# EUROPEAN PATENT APPLICATION

(11) **EP 3 995 309 A1**
(43) Date of publication of application: **11.05.2022**
(21) Application number: 20206820.1
(22) Date of filing: 10.11.2020
(51) Int. Cl.: B32B 27/08, B32B 27/32, C08J 5/18

(54) **MULTILAYER MONO-MATERIAL POLYETHYLENE ASSEMBLY AND ITS USE IN FOOD PACKAGING**

(71) Applicant: Di Mauro Officine Grafiche S.p.A., 84013 Cava de' Tirreni (IT)
(72) Inventor: D'ALTERIO, Gennaro, 80019 Qualiano (IT); D'Urso, Edoardo, 84125 Salerno (IT)
(74) Representative: Cattaneo, Elisabetta

(57) **Abstract**

The invention concerns a multilayer mono-material PE assembly that achieves durability, versatility and customization, lightness and chemical resistance, gas and moisture barrier chemical resistance, gas and moisture barrier, while being at the same time environmentally sustainable and recyclable with low effort. The invention relates also to a process for producing it and its use in packaging.

## Description

### FIELD OF INVENTION

The present invention relates to a packaging film technology, in particular it relates to a specific multilayer mono-material PE assembly, comprising polyethylene (PE) blend. Said multilayer mono-material PE assembly showed lots of remarkable features, such as durability, versatility and customization, lightness and chemical resistance, gas and moisture barrier, while being at the same time environmentally sustainable and recyclable with low effort. The latter is produced via an optimized extrusion process of production and employed in the packaging field.

### STATE OF THE ART

Plastic packaging, in particular food-grade plastic packaging, is a field with a huge impact on the market, due to the extensive need of ways of packing, stocking and, regarding the food, preserving it, and due to the environmental impact of the packaging productions.

Lately, there are various packaging options available on the market.

All the packaging options present a lot of environmental issues.

In fact, the European Community in February 2018 issued a recommendation directing member states to ensure that by 2030 all packaging is designed for recycling. During operations, it is necessary to redesign the plastic packaging to ensure that it meets the original needs and is sustainable. In the case of plastic, the product is sustainable only if it is recyclable and if the recycling process has a low environmental impact.

To be sustainable, plastic packaging must be recyclable, therefore the following conditions must be met:
- it must be made with a plastic that is collected for recycling, have market value and/or be supported by a mandatory recovery program,
- it must be selected and aggregated into suitable flows for recycling processes,
- it must be capable of being transformed and recycled using commercial processes, and
- it must become a raw material in the production of new products.

The packaging currently on the market consists of multi-material films, e.g. an outer layer of OPA (biaxially oriented polyamide), PET (polyethylene terephthalate), BOPP (biaxially-oriented polypropylene) and an inner layer of PE, coupled with several types of additives, such as, depending on the need, antibacterial, antioxidant, toughening, homogenizing, opening, slip agents, and adhesive systems in between.

In most of those known multilayer multi-material assembly, adhesive systems must be comprised and are essential, but this complicates the subsequent recycling process. Therefore, at the end of their shorter life, they are delivered in the undifferentiated fraction.

The presence of specific adhesive systems is mandatory since the materials to be employed in said multilayers are chemically different and need a strong "gluing" additive for the materials assembly.

This type of packaging born in the eighties was designed with the aim of protecting, distributing, and promoting the product, but did not consider the recycling process that would need to follow.

In view of this problem, today it is necessary to reinvent plastic packaging to guarantee the same objectives, such as durability, versatility and customization, lightness and chemical resistance, gas and moisture barrier, taking into account at the same time its sustainability and recyclability.

In this sense, another problem rises, when redesigning plastic packaging, it is essential to keep in mind that it must ensure the same performance during use on the current existing packaging machine of final packaging users. Otherwise, a large investment and long times are required for the redesign, modification and replacement of the packaging machinery.

Among the most commonly used machines for plastic packaging purposes are the so-called "Form, Fill & Seal" machines. They are versatile types of machines, which pack an almost unlimited range of different products into bags delivering high performance and reliability. They have the remarkable advantage that the steps of forming, filling and sealing happen in a single work process.

The advantages of this "Form Fill & Seal" packaging machine are connected to the fact that it allows to reach packaging speeds above 200 packs/min, therefore it is defined as high speed form fill seal packaging machine. With regard to the transversal sealing, this packaging machine can have a rotary sealing unit called "Long Dwell", where the sealing bars during the sealing phase accompany the advancement of the film before triggering the cut and then the release of the package. The Long Dwell rotary system with straight section has several strengths, which allow to make absolutely hermetic welds at high speed due to the longer contact time (the sealing bars during the welding phase accompany the advancement of the film, increasing its residence time near the heat source) and it avoids stressing the sealing when the product falls into the package, thus reducing the possible negative effects of the violent collision of the falling product against stationary sealing masses.

Other widely used packaging systems seal a lidding film on a tray. The tray can be thermoformed in line by the packaging machine (also called as thermoforming machines) or preformed (also called tray sealer machines).

In addition to the previous systems, there are the so-called "Pouch Fill & Seal machines" where the preformed pouches are filled and sealed.

Nevertheless, these packaging machines have been conceived to process multilayer multi-material assembly and this is in contradiction with the aim of recycling the entire package, that should be manufactured with the same polymer.

The recyclability of the final product has a remarkable importance; therefore, it is still required the development of environmentally friendly materials.

Furthermore, even if the same material is used, thus solving the recycling problem, the packaging machine requires specific changes to guarantee the integrity of the final packaging, thus increasing the costs of the packaging.

A first attempt to solve the problem by using the same chemical nature polymer was to reduce the contact time during the welding step in the packaging machines.

This is only possible by increasing the temperatures of the sealing bars in order to make the welding process as fast as possible, but this solution was considered not convenient by the packaging final users.

The object of the invention is hence to have a final packaging that can be recycled, while maintaining the same apparatuses and devices already used in the market for packing the products and with same performances.

### SUMMARY OF THE INVENTION

The inventors have surprisingly found out a new multilayer mono-material PE assembly that can be used in the goods packing machines, with no relevant adaptation, thus obtaining final packaging having optimal mechanical properties and that can be recycled. The final packaging showed lots of remarkable features, such as durability, versatility and customization, lightness and chemical resistance, gas and moisture barrier, while being at the same time environmentally sustainable and recyclable with low effort.

Therefore, in a first aspect the invention relates to a multilayer mono-material PE assembly, comprising at least two layers:
- a first layer comprising at least one film of high-density polyethylene having a density value equal or higher than 0.935 g/cm³, and
- a second layer comprising at least one sublayer comprising a polyethylene (PE) blend, said PE blend comprising with respect to the total amount of each sublayer:
   - from 0 to 85 wt% of polyethylene resin having a density value in the range from 0.914 to 0.930 g/cm³,
   - at least 15 wt% of a polyethylene component selected from the group consisting of
      i) a very low-density polyethylene (VLDPE) and/or an ultra low-density polyethylene (ULDPE) and having a density value ≤ 0.912 g/cm³,
      ii) a polyethylene copolymer selected from the group consisting of polyolefin plastomer (POP), EVA, EAA, EBA, EEA, EEHA and EMAA, wherein the ethylene monomer is higher than or equal to 50% wt and
      iii) a mixture of i) and ii).

In an advantageous aspect, in the multilayer mono-material PE assembly the difference of the melting point (ΔTₘ) of the first layer with respect to the second layer is in the range from 5 to 80°C, preferably from 10 to 50°C.

In more advantageous aspect in the multilayer mono-material PE assembly the second layer comprises more than one sublayer, preferably from 2 to 31 sublayers, which are equal or different with respect to each other.

In a further advantageous aspect, the multilayer mono-material PE assembly further comprises at least one third layer that is a printed layer and/or a varnish layer and/or a metallized layer, being the at least one third layer placed on the first layer and/or between the first and the second layer.

The multilayer mono-material PE assembly contains the first layer of HDPE having a density value equal to or higher than 0.935 g/cm³.

The inventors of the present invention have surprisingly found that they could replace well known multi-material assembly with a multilayer mono-material PE assembly, comprising a polyethylene (PE) blend, thus granting an assembly made of one polymer and avoiding adhesive systems. The multilayer assembly of the invention is advantageously a mono-material assembly, which allow the recycling of the complete material, while reducing or eliminating the amount of contaminants such as adhesive system.

The PE-blend of the multilayer mono-material PE assembly of the invention is employed in an optimized extrusion process of production, thus obtaining the multilayer mono-material PE assembly.

In a further aspect the invention concerns a process for preparing the multilayer mono-material PE assembly.

Therefore, the invention relates to a process for preparing the multilayer mono-material PE assembly according to the invention, comprising the steps of:
a) providing a first layer comprising at least one film of high-density polyethylene having a density value equal to or higher than 0.935 g/cm³;
b) providing an extrusion group, said extrusion group comprising at least one extruder, a feed block, an extrusion flat die and a Chill roll - Nip roll unit;
c) placing the first layer on the Chill roll - Nip roll unit;
d) loading in the at least one extruder at least one PE blend said PE blend comprising
   - from 0 to 85 wt% of polyethylene resin having a density value in the range from 0.914 to 0.930 g/cm³,
   - at least 15 wt% of a polyethylene component selected from the group consisting of
      i) a very low-density polyethylene (VLDPE) and/or an ultra low-density polyethylene (ULDPE) and having a density value ≤ 0.912 g/cm³,
      ii) a polyethylene copolymer selected from the group consisting of polyolefin plastomer (POP), EVA, EAA, EBA, EEA, EEHA and EMAA, wherein the ethylene monomer is higher than or equal to 50% wt, and
      iii) a mixture of i) and ii), and
      optional additives;
e) extruding the at least one PE blend on the first layer through the extrusion flat die of the extrusion group, thus obtaining a mono-material polyethylene multilayer having the second layer comprising at least one sublayer comprising at least one blend polyethylene (PE),
f) quenching the mono-material polyethylene multilayer, thus obtaining the multilayer mono-material PE assembly,
wherein the setting parameters of the extrusion group were:
- a line speed of about 50-250 m/min,
- at least one extrusion coating weight of about 5-50 g/m²,
- a temperature profile of the at least one extruder from 170°C to 300°C and
the quenching step is a cooling step from 300°C to 15°C.

As it will be evident from the experimental part the inventors, while optimizing the extrusion process of the invention, tried different conditions for the extrusion group in order to find the optimal final product.

It was surprising that all the parameters usually applied with the prior art multilayer multi-material assembly should have been modified to become milder, thus rendering the process more convenient with less harsh conditions.

The improved process was able to avoid the numerous issues encountered, such as dimensional instability of the multilayer mono-material PE assembly with subsequent film width shrinkage, specifically around 10 % shrinkage in transversal direction, and a large reduction in longitudinal direction. While changing the parameters, the inventors were able to obtain a remarkable improvement of the dimensional stability of the multilayer mono-material PE assembly, thus completely avoiding the assembly width shrinkage as it will be evident from the evaluation of the mechanical properties of the multilayer mono-material PE assembly of the invention.

Through the final optimized extrusion process of the invention, it is now possible to obtain a stable, flexible, strong and recyclable multilayer mono-material PE assembly, having comparable if not even better technical and mechanical features, with respect to the prior art multilayer multi-material PE assembly.

Therefore, the inventors of the present invention have surprisingly found that, by employing the polyethylene (PE) blend of the invention as second layer on a first layer of the same chemical nature, they could replace standard multilayer multi-material assembly, providing with a multilayer mono-material PE assembly, reaching the same objectives, such as durability, versatility and customization, lightness and chemical resistance, gas and moisture barrier, taking into account at the same time their sustainability and environmental impact.

Surprisingly, all these features have been reached by using a specific polyethylene (PE) blend for preparing the multilayer mono-material PE assembly of the invention, without the need of non PE-based components normally employed for those packaging, such as adhesive systems, OPA, PET, PP, thus being recyclable.

Therefore, the multilayer mono-material PE assembly according to the invention is without an adhesive system.

Without being bound to any theory and as it will be apparent from the detailed description and from the examples, the features of the multilayer mono-material PE assembly of the invention depend on the specific polyethylene (PE) blend used and said features allow to guarantee the same tightness of the packaging, storage and handling of the final product, with respect to the known multilayers multi-materials film.

Therefore, the multilayer mono-material PE assembly of the invention is obtainable by the process as above outlined.

The final structure and specifically the materials of the multilayer mono-material PE assembly allow to use it in the field of the packaging. Preferably it is used for packing goods, preferably food.

Furthermore, advantageously the multilayer of the invention allowed to pack by using standard packaging machines.

Surprisingly, the multilayer PE assembly of the invention allowed to directly use these packaging machines without any kind of change.

When the inventors realized that they can use as same chemical nature polymer, they encountered a problem during the packaging step, specifically, if any type of multilayer mono-material PE assembly had been used, the first layer and the second layer would have been very similar. This meant that for a multilayer mono-material PE assembly, while sealing the layers, the layers contact area underwent excessive softening, which compromised its integrity and did not allow a proper release for the sealing jaws. This phenomenon would have seriously affected the quality and dimensional stability of the sealed area.

The inventors surprisingly realized that, when the polyethylene (PE) blend is used as second layer in the multilayer assembly on a first layer of HDPE of the same chemical nature, they could overcome this problem, thus ensuring that the material being sealed responds very quickly, avoiding the softening of the external HDPE support.

Lastly, the multilayer mono-material PE assembly is meant to be used in the packaging field, therefore the invention further relates to a use of said multilayer mono-material PE assembly in the packaging field.

The difference of melting points between the first and the second layer allowed to use the packaging machines at temperature capable to weld the packaging without affecting the HDPE film of the multilayer PE assembly.

Advantageously, these packaging machines with the multilayer PE assembly of the invention can work in milder conditions than with the prior art multilayer assembly.

Therefore, the invention also concerns the use of the multilayer mono-material PE in a packaging machine for packing goods, preferably food.

### DESCRIPTION OF THE FIGURES

Figure 1 shows an extrusion coating plant.
Figure 2 shows the extrusion group of the extrusion coating plant.
Figures 3A, 3B, 3C are examples of the multilayer mono-material PE assembly of the invention.
Figure 3D shows the multilayer mono-material PE assembly of the invention as prepared in Example 3.
Figure 4 shows differential scanning calorimetry (DSC) of the multilayer mono-material PE assembly of the invention as prepared in Example 3.
Figure 5 shows the multilayer multi-material assembly of the prior art.
Figure 6 shows the graph of the sealing strength of a multilayer mono-material PE assembly of the invention as prepared in Example 2.

### DETAILED DESCRIPTION OF THE INVENTION

The present invention therefore relates to a multilayer mono-material PE assembly, comprising at least two layers:
- a first layer comprising at least one film of high-density polyethylene having a density value equal to or higher than 0.935 g/cm³, and
- a second layer comprising at least one sublayer comprising a polyethylene (PE) blend, said PE blend comprising with respect to the total amount of each sublayer:
   - from 0 to 85 wt% of a polyethylene resin having a density value in the range from 0.914 to 0.930 g/cm³,
   - at least 15 wt% of a polyethylene component selected from the group consisting of
      i) a very low-density polyethylene (VLDPE) and/or an ultra low-density polyethylene (ULDPE) and having a density value ≤ 0.912 g/cm³,
      ii) a polyethylene copolymer selected from the group consisting of polyolefin plastomer (POP), EVA, EAA, EBA, EA, EEHA and EMAA, wherein the ethylene monomer is higher than or equal to 50% wt and
      iii) a mixture of i) and ii).

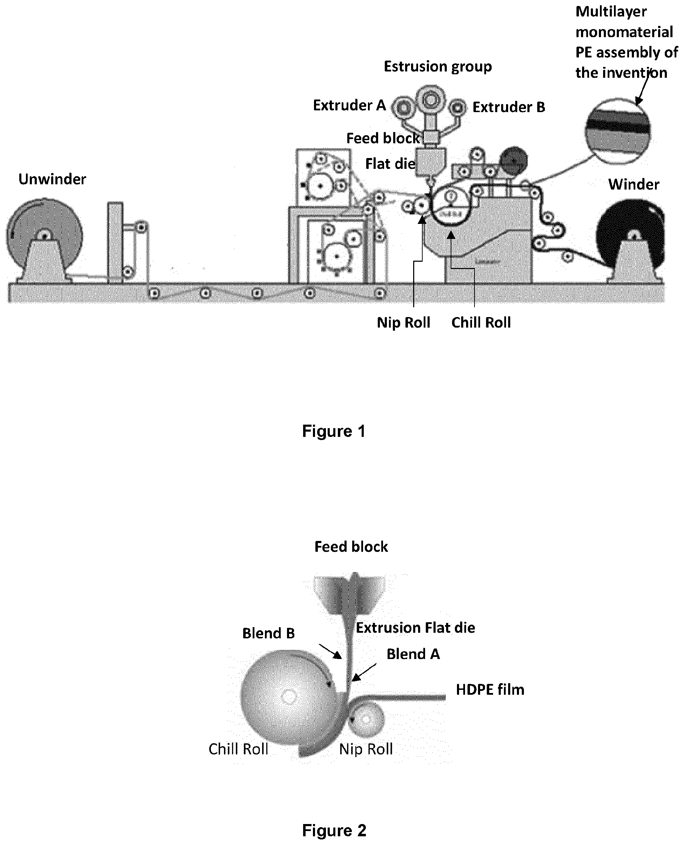

In the present invention, with the following terms:
- "polyethylene or polyethylene resin", it is meant a polymeric material having 100% of polyethylene homopolymer;
- "polyethylene co-polymers" it is meant a polymeric material having a very high overall content of ethylene monomer, for example greater than 50% wt of the total monomer content;
- "HDPE" it is meant a high-density polyethylene having a density value ≥ 0.935 g/cm³.
- "LDPE" it is meant a low-density polyethylene, having a density value ≤ 0.930 g/cm³;
- "LLDPE" it is meant a linear low-density polyethylene, having a density value ≤ 0.930 g/cm³;
- "VLDPE" it is meant a very low-density polyethylene, having a density value ≤ 0.912 g/cm³;
- "ULDPE" it is meant an ultra low-density polyethylene, having a density value ≤ 0.912 g/cm³;
- "polyolefin plastomer (POP)" it is meant a polyethylene-based plastomer, having a density value ≤ 0.912 g/cm³;
- "EVA" it is meant ethylene-vinyl acetate, a copolymer of ethylene and vinyl acetate, having a density value ≥ 0.920 g/cm³;
- "EAA" it is meant an ethylene acrylic acid copolymer, having a density value of around ≥ 0.925 g/cm³;
- "EBA or EnBA" it is meant an ethylene n-butyl acrylate copolymer, having a density value in the range from 0.92 to 0.94 g/cm³;
- "EEA it is meant an ethylene ethyl acrylate copolymer, having a density value in the range from 0.925 to 0.945 g/cm³;
- "EEHA it is meant ethylene 2-ethyl hexyl acrylate copolymer, having a density value in the range from 0.90 to 0.950 g/cm³;
- "EMAA" it is meant ethylene-methacrylic acid copolymer, having a density value in the range from 0.91 to 0.950 g/cm³;
- "adhesive system" it is meant a chemically reacting adhesive system, such as a water-based or a solvent-based or a solvent free polyurethane adhesive, which can be a moisture-curing or a two-component adhesive system
- "extrusion process" or "extrusion coating method" it is meant a high-volume manufacturing process in which raw plastic is melted and formed into a continuous profile.
- "extrusion group" it is meant the heart of the "extrusion coating plant" and it consists of one or more (screw) extruders which convey the extrudate, through a feed block to the extrusion flat die, from which an extrudate is drawn down and coated onto a first layer as-represented in Figures 1 and 2; the extrusion group comprises a "Chill roll - Nip roll unit".
- "Chill roll - Nip roll unit" it is meant a calendering system, which consists in two rolls, respectively Chill Roll and Nip Roll, which cools down the temperature of the extrudate on the substrate (a first layer) and, by applying mutual pressure, forces the assembly extrudate on the substrate (a first layer) into a die, which shapes the polymer into a shape that hardens during cooling.
- "Form fill & seal machine" it is meant a packaging machine that, starting from a plastic film wound on a reel, wrap the same around a forming tube, overlapping the edges and sealing the ends, seals the packages with the product to be packaged inside. The essential parts of a packaging machine are a power supply group, a reel holder group, a longitudinal welding group, a transversal welding group. The main elements of a packaging machine are undoubtedly the longitudinal and/or transversal sealing groups, in general the most commonly used welding methods in the packaging sector are a hot bar welding, a heat impulse welding, a hot wire welding, an ultrasonic welding and a cold welding. Among the types of welding, the most widespread is hot bar welding, which is based on the properties of thermoplastic materials of being sensitive to heat.

The multilayer mono-material PE assembly contains the first layer of HDPE having a density value equal to or higher than 0.935 g/cm³.

Preferably the HDPE is a mono oriented HDPE, mainly oriented in the axial direction with MDO (Machine Direction Orientation) technology, having a density of 0.951 g/cm³.

The HDPE has preferably a thickness in the range from 15 to 120 µm, more preferably about 30 µm. For example, according to the invention a suitable HDPE is available on the market, from the Supplier "Termoplast" with code "Crystal PE EX" product.

The preferred HDPE had at least a corona treated surface with surface tension ≥ 38 dynes/cm prepared for the anchoring of printing inks and a plain surface with surface tension ≤ 32 dynes/cm.

The preferred HDPE has the following mechanical characteristics, calculated according to ASTM D882:
- Elastic modulus: 500 ÷ 2500 MPa; and
- Tensile strength at break: 40 ÷ 80 N/15mm.

The multilayer mono-material PE assembly of the invention comprises the second layer made of the polyethylene (PE) blend of the invention.

In the first embodiment, the second layer comprises at least one sublayer comprising a polyethylene (PE) blend, said PE blend comprising with respect to the total amount of each sublayer:
- from 0 to 85 wt% of polyethylene resin having a density value in the range from 0.914 to 0.930 g/cm³,
- at least 15 wt% of a polyethylene component i) that is a very low-density polyethylene (VLDPE) and/or an ultra low-density polyethylene (ULDPE) and having a density value ≤ 0.912 g/cm³.

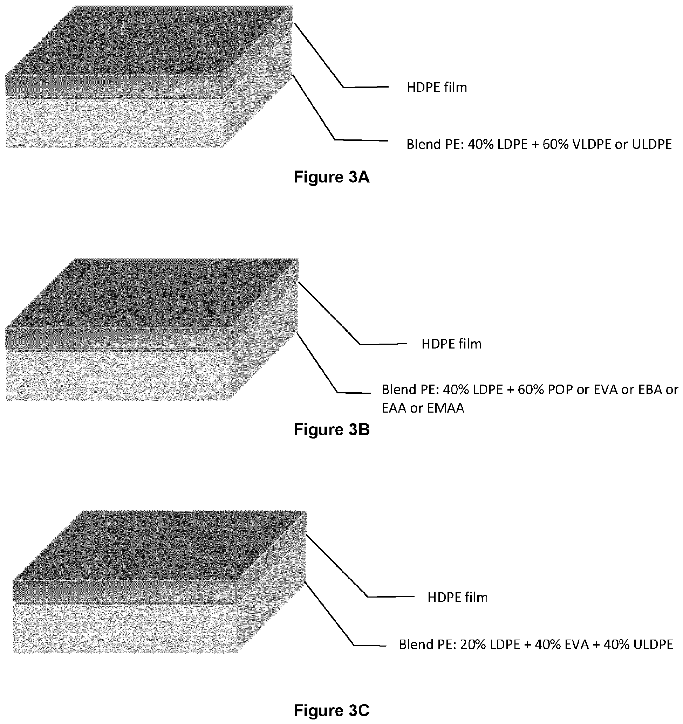

An example of said first embodiment is represented in Figure 3A.

In a second embodiment the second layer comprises at least one sublayer comprising a polyethylene (PE) blend, said PE blend comprising with respect to the total amount of each sublayer:
- from 0 to 85 wt% of polyethylene resin having a density value in the range from 0.914 to 0.930 g/cm³,
- at least 15 wt% of a polyethylene component ii), that is a polyethylene copolymer selected from the group consisting of polyolefin plastomer (POP), EVA, EAA, EBA, EEA, EEHA and EMAA, wherein the ethylene monomer is higher than or equal to 50% wt.

An example of said second embodiment is represented in Figure 3B.

Preferably, the at least 15% of polyethylene component is EVA or POP, more preferably POP.

In a third embodiment the second layer comprises at least one sublayer comprising a polyethylene (PE) blend, said PE blend comprising with respect to the total amount of each sublayer:
- from 0 to 85 wt% of polyethylene resin having a density value in the range from 0.914 to 0.930 g/cm³,
- at least 15 wt% of a polyethylene component iii), that is mixture of i) a very low-density polyethylene (VLDPE) and/or an ultra low-density polyethylene (ULDPE) and having a density value ≤ 0.912 g/cm³ and ii) a polyethylene copolymer selected from the group consisting of polyolefin plastomer (POP), EVA, EAA, EBA, EEA, EEHA and EMAA, wherein the ethylene monomer is higher than or equal to 50% wt.

An example of said third embodiment is represented in Figure 3C.

In a preferred embodiment of the invention the second layer comprises more than one sublayer, more preferably from 2 to 31, that can be equal or different with respect to each other.

Advantageously, the second layer can further comprise an additive selected from a colouring agent, a coloured masterbatch, a TiO₂ masterbatch, a slip agent, an antifogging agent, UV-barrier additive and mixture thereof, preferably in the total amount from 1 to 20% wt with respect to the total weight of the sublayer.

The multilayer mono-material PE assembly according to the invention in the sublayer of the second layer contains the polyethylene resin having a density value in the range from 0.914 to 0.930 g/cm³. Preferably said polyethylene resin is LDPE having a density of 0.924 g/cm³, more preferably in an amount from 24% to 60 % wt, still more preferably about 30%. Preferably, the polyethylene resin is generally known on the market as LDPE. An example is LPDE sold by Ineos with product code 23L430.

The multilayer mono-material polyethylene assembly according to the invention, in the sublayer of the second layer contains the polyethylene component. Preferably said polyethylene component is i), i.e. it is a very low-density polyethylene (VLDPE) and/or an ultra low-density polyethylene (ULDPE) and having a density value ≤ 0.912 g/cm³, more preferably is very low-density polyethylene (VLDPE), still more preferably in an amount equal to or higher than 60wt%.

In the multilayer mono-material PE assembly the difference of the melting point (ΔTₘ) of the first layer with respect to the second layer is in the range from 5 to 80°C, preferably 10 to 50°C.

The multilayer mono-material PE assembly according to the invention further comprises at least one third layer that is a printed layer and/or a varnish layer and/or a metallized layer, being one independently to the other, the at least one third layer placed on the first layer and/or between the first and the second layer.

The multilayer mono-material polyethylene assembly can comprise a further material selected from the group consisting of EVOH (Ethylene vinyl alcohol), PVOH (polyvinyl alcohol), PVDC (polyvinylidene chloride), a SiO₂ based ceramic material, a Al₂O₃ based ceramic material, a SiO₂/Al₂O₃ based ceramic material, a metallization material and a gas barrier material. Said further material is preferably in the form a coating, for example a EVOH coating, PVOH (polyvinyl alcohol) coating, a PVDC (polyvinylidene chloride) coating, a SiO₂ based ceramic coating, a Al₂O₃ based ceramic coating, a SiO₂/Al₂O₃ based ceramic coating, a metallization coating or a gas barrier coating. More preferably the further material is EVOH (Ethylene vinyl alcohol).

This further material is present in the final multilayer mono-material PE assembly of the invention in an amount not more than 10%, more preferably 5% wt, with respect to the total amount of the final PE assembly. Still more preferably, this further material is present in the final multilayer mono-material PE assembly of the invention in an amount not more than 3% wt with respect to the total amount of the final PE assembly.

Said further material is present independently in the first layer, on the first layer or in the second layer as a further sublayer or it is present in the further third layer.

Preferably, the third layer is a varnish layer having a heat resistance equal to or higher than 180°C. This third layer facilitates the release from the sealing jaws during the process of the invention. More preferably, this third varnish layer has a thickness equal or lower than 2 µm, more preferably in the range from 1 to 2 µm.

In another embodiment this varnish layer is a tactile-effect varnish layer and has preferably a thickness equal or lower than 25 µm, more preferably in the range from 5 to 20 µm.

Said very thin third layer does not adversely affect the single-material recycling or the final properties of the recycled product, such as imperfections, surface defects, dots and/or infusions, nor on obtaining a single homogeneous phase. Moreover, such a low thickness of the coating layer guarantees a faster detachment of the multilayer mono-material PE assembly in contact with the sealing bars, thus improving runnability during the packaging phase as it will be more evident in the experimental part.

The multilayer mono-material PE assembly according to the invention has preferably a thickness in the range of at most 250 µm.

In a first embodiment, the multilayer mono-material PE assembly according to the invention has preferably a thickness in the range from 25 to 250 µm.

In another embodiment when the varnish layer is a tactile-effect varnish layer, then the multilayer mono-material PE assembly according to the invention has preferably a thickness in the range from 50 to 250 µm.

Advantageously, the multilayer mono-material PE assembly according to the invention is without an adhesive system.

Without being bond to any theory the inventors deem that this specific polyethylene (PE) blend, when used as second layer in a multilayer assembly on a first layer of HDPE, could overcome the temperature difference problems, ensuring that the material being sealed responds very quickly avoiding the softening of the first layer of the same chemical nature.

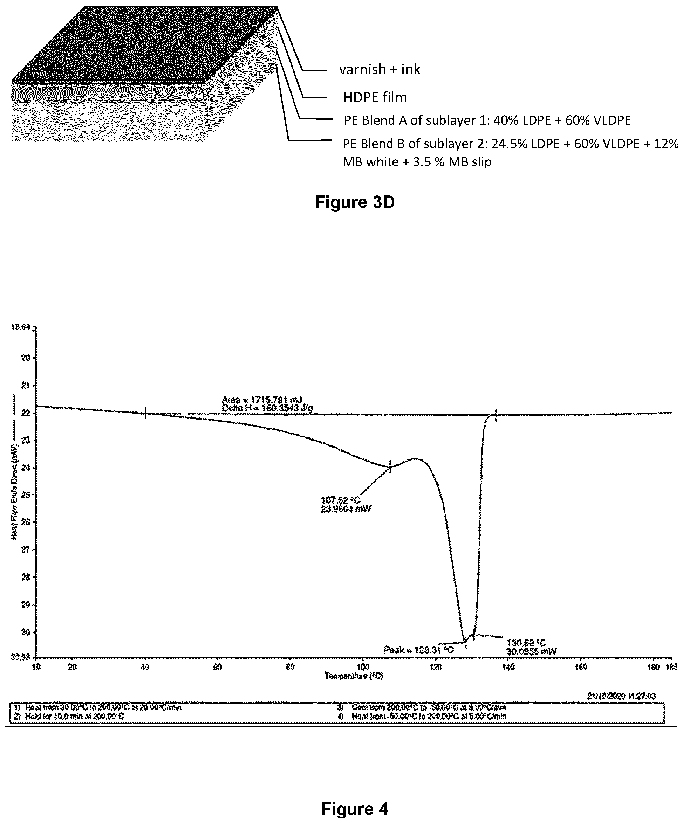

A preferred example of the multilayer of the invention having the first, the second and the at least one third layer is represented in Figure 3D.

In a further aspect the invention concerns a process for preparing the multilayer mono-material PE assembly.

Therefore, the invention relates to a process for preparing the multilayer mono-material PE assembly comprising the steps of:
a) providing a first layer comprising at least one film of high-density polyethylene having a density value equal to or higher than 0.935 g/cm³;
b) providing an extrusion group, said extrusion group comprising at least one extruder, a feed block, an extrusion flat die and a Chill roll - Nip roll unit;
c) placing the first layer on the Chill roll - Nip roll unit;
d) loading in the at least one extruder at least one polyethylene (PE) blend, said PE blend comprising
   - from 0 to 85 wt% of polyethylene resin having a density value in the range from 0.914 to 0.930 g/cm³,
   - at least 15 wt% of a polyethylene component selected from the group consisting of
      i) a very low-density polyethylene (VLDPE) and/or an ultra low-density polyethylene (ULDPE) and having a density value ≤ 0.912 g/cm³,
      ii) a polyethylene copolymer selected from the group consisting of polyolefin plastomer (POP), EVA, EAA, EBA, EEA, EEHA and EMAA, wherein the ethylene monomer is higher than or equal to 50% wt and
      iii) a mixture of i) and ii) and
      optional additives;
e) extruding the at least one PE blend on the first layer through the extrusion flat die of the extrusion group, thus obtaining a mono-material polyethylene multilayer having the second layer comprising at least one sublayer comprising at least one polyethylene blend (PE),
f) quenching the mono-material polyethylene multilayer, thus obtaining the multilayer mono-material PE assembly,
wherein the setting parameters of the extrusion group were:
- a line speed of about 50-250 m/min,
- at least one extrusion coating weight of about 5-50 g/m²,
- a temperature profile of the at least one extruder from 170°C to 300°C and
the quenching step is a cooling step from 300°C to 15°C.

Preferably, the process is a continuous process.

The process of the invention in step d) comprises at least one extruder.

In step d) optional additives can be present.

Said additives can be selected from a colouring agent, a coloured masterbatch, a TiO2 masterbatch, a slip agent, an antifogging agent, UV-barrier additive and mixture thereof, preferably in the total amount from 1 to 20% wt with respect to the total weight of the sublayer.

Among them, TiO₂ master batch and a slip agent or a mixture thereof are preferred.

In the preferred not limiting example of the process of the invention in step d) there are two (screw) extruders, Extruder A and Extruder B.

In this preferred embodiment:
- in the extruder A a PE blend A is loaded and comprises 60 wt% of a very low-density polyethylene (VLDPE) and having a density value ≤ 0.912 g/cm³ and 40 wt% of a polyethylene resin having a density value in the range from 0.914 to 0.930 g/cm³ and
- in the extruder B a PE blend is loaded and comprises 60 wt% of a very low-density polyethylene (VLDPE), 24.5 wt% of a polyethylene resin having a density value in the range from 0.920 to 0.930 g/cm³, 12 wt% of the additive TiO2 masterbatch and 3.5 wt% of additive slip agent.

As above indicated, the "extrusion group" of the step b) is the heart of the "extrusion coating plant" and it consists in at least one extruder. In the preferred embodiment, in the extrusion group two screw extruders (Extruder A and Extruder B) are present. They convey the extrudate, through a feed block to the extrusion flat die, from which an extrudate blade comes out and can be poured on a support as represented in Figures 1 and 2. The extrusion group contains also the "Chill roll - Nip roll unit", i.e. a calendering system, wherein the first layer to be coated is fed continuously from an unwind reel over the rubber pressure roll into the nip where the laminate is formed by pressing the two layers together.

In the setting parameters of the extrusion group applied in step f), the temperature profile of the at least one extruder is from 170°C to 300°C, preferably 190°C to 280°C. More preferably the temperature profile for the at least one extruder has temperature steps of 190°C, 200°C, 210°C, 220°C, 230°C, 240°C, 260°C, 280°C, 280°C, 280°C.

Advantageously, the extrusion group position is at a value of Air-Gap of 245 mm the feed block temperature is at a value of 280°C, and the extrusion flat die temperature is at a value of 280-315 °C, the Chill-Roll calender temperature is at a value in the range from 15 to 30 °C, preferably it is at a value of 15°C, the Chill-Roll calender pressure is at a value of 2 bar (1.974 atm) and the die offset is at a value of -25 mm.

Advantageously, the process of the invention can provide for a step a') before step a). In a step a'), the first layer can be coated with at least one third layer that can be one or more of a printed layer, a varnish layer and a metallized layer. Therefore, the at least one third layer can be present on the first layer before the process of the invention.

Preferably step e) of extruding the second layer comprising at least one sub-layer of at least one PE blend takes place directly on the first layer or directly on the at least one third layer.

Advantageously, the at least one third layer is made of a further material selected from the group consisting of EVOH (Ethylene vinyl alcohol), PVOH (polyvinyl alcohol), PVDC (polyvinylidene chloride), a SiO₂ based ceramic material, a AI203 based ceramic material, a SiO₂/Al₂O₃ based ceramic material, a metallization material and a gas barrier material. More preferably the further material is EVOH (Ethylene vinyl alcohol).

When the third layer is a printed layer, the third layer can be deposited on the first layer through a rotogravure technology. In another embodiment, the step a') of providing the printing layer can be carried out through flexographic technology, offset UV or EB, digital printing or other types of printing suitable for polyolefin supports.

Before step a), in a step a"), or before d) in a step d)' the first layer can be coated with a primer additive, able to increase the grip of the at least one polyethylene (PE) blend of the second layer on the first layer of the multilayer mono-material PE assembly of the invention.

As it will be evident from Example 3 of the experimental part the inventors, while optimizing the extrusion process of the invention, tried different conditions for the extrusion group, in order to find the optimal final product

It was surprising that all the parameters usually applied with the prior art multilayer assembly should have been modified to become softer, thus rendering the process more convenient with less harsh conditions.

For example, the linear speed was reduced from 200 m/min to 100 m/min. The inventors also developed new Chill-roll calender temperatures and pressures, respectively decreasing the first from 25 °C to 15 °C and the second from 4 bar (3.948 atm) to 2 bar (1.974 atm). Even the feed block temperature had to be adjusted, decreasing it from 315 °C to 280-300 °C and the two temperature profiles of the two Extruders A and B in the preferred embodiment had to be tuned in order to find the specific temperature steps above described.

The quenching step f) is a cooling step from 300°C to 15°C, preferably from 300°C to 25°C, still more preferably from 300°C to 40°C.

All those conditions have been tested and changed in order to succeed in obtaining an improved process, avoiding the numerous issues encountered, such as dimensional instability of the multilayer mono-material PE assembly with subsequent film width shrinkage, specifically around 10 % shrinkage in transversal direction, and a large reduction in longitudinal direction. While changing the parameters, the inventors were able to obtain a remarkable improvement of the dimensional stability of the multilayer mono-material PE assembly, thus completely avoiding the film width shrinkage as it will be evident from the evaluation of the mechanical properties of the multilayer mono-material PE assembly of the invention.

Through the final optimized extrusion process of the invention, it is now possible to obtain a stable, flexible, strong and recyclable multilayer mono-material PE assembly, having comparable if not even better technical and mechanical features, with respect to the prior art multilayer multi-material assembly.

Therefore, the inventors of the present invention have surprisingly found that, by employing the PE blend as second layer on a first layer of the same chemical nature, they could replace standard multilayer multi-material assembly, providing with a multilayer mono-material PE assembly, reaching the same objectives, such as durability, versatility and customization, lightness and chemical resistance, gas and moisture barrier, taking into account at the same time their sustainability and environmental impact.

Surprisingly, all these features have been reached by using a multilayer mono-material PE assembly of the invention, without the need of non PE-based additives normally employed for those packaging, such as OPA, PET, PP, EVOH, thus being recyclable.

Therefore, the multilayer mono-material PE assembly of the invention is obtainable by the process as above outlined.

The final structure and specifically the materials of the multilayer mono-material PE assembly allow to use it in the packaging field.

Furthermore, advantageously, the multilayer mono-material PE assembly of the invention allowed to pack goods by using standard packaging machines.

Therefore, the multilayer mono-material PE assembly is used in a packaging machine for packing goods, preferably being said goods food.

This packaging machine starts from a plastic film wound on a reel, wraps the same around a forming tube, overlaps the edges and sealing the ends, seals the packages with the product (food) to be packaged inside. The essential parts of a packaging machine are a power supply group, a reel holder group, a longitudinal welding group, a transversal welding group. The main elements of a packaging machine are undoubtedly the longitudinal and/or transversal sealing groups, in general the most commonly used welding methods in the packaging sector are a hot bar welding, a heat impulse welding, a hot wire welding, an ultrasonic welding and a cold welding. Among the types of welding, the most widespread is hot bar welding, which is based on the properties of thermoplastic materials of being sensitive to heat.

As explained in detail in Example 9, surprisingly the multilayer mono-material PE assembly of the invention allowed to directly use traditional packaging machines without any kind of change, for example "Form Fill & Seal" machines.

Without being bound to any theory, the inventors deem that the specific e second layer of the multilayer mono-material PE assembly has a sufficient melting temperature difference with respect to the first layer, so as to act on the speed in the sealing phase of the multilayer mono-material PE assembly, thus ensuring that the multilayer mono-material PE assembly of the invention, while being sealed, responds very quickly, thus avoiding the softening of the first layer.

Advantageously, the invention provides for a multilayer mono-material PE assembly, wherein the difference of melting points (ΔTₘ) of the first layer with respect to the second layer in the range from 5 to 80°C, preferably 10 to 50°C.

Specifically, the first layer showed a melting point of 130-140°C and the second layer a melting point lower than 110°C. The difference of melting points between the first and the second layer allowed to use all the traditional packaging machines, preferably "Form Fill & Seal" machines, at temperatures capable to weld the packaging without affecting the HDPE film of the multilayer mono-material PE assembly.

Advantageously, the packaging machines with the multilayer mono-material PE assembly of the invention can work in milder conditions than with the prior art multilayer multi-material assembly.

Therefore, the invention also concerns the use of the multilayer mono-material PE for packing goods, being preferably said goods food. In an advantageous embodiment, the used packaging machine is a "Form, Fill & Seal" packaging machine.

The invention will be further detailed with the following experimental part, reporting examples and tests on the specific PE blend and multilayer mono-material PE assembly of the invention.

### EXPERIMENTAL PART

### Example 1

### Preparation of a polyethylene (PE) blend of the invention

The following raw materials have been provided:

**Table 1**

| **Material** | **Density (g/cm³)** | **Supplier** | **Product Code** |
|---|---|---|---|
| **LDPE** | 0.924 | Ineos | 23L430 |
| **VLDPE** | 0.911 | Dow | Attane 4606G |
| **MB white*** | 1.51 | Ampacet | 110317 |
| **MB slip**** | 0.940 | Constab | SAB 06569 LD |

| | | | |
|---|---|---|---|
| *MB white was a TiO₂ masterbatch ** MB slip was a slip agent | | | |

Two different polyethylene (PE) blends, namely PE blend A and PE blend B, were provided in the amounts reported in the Table 2.

**Table 2**

| **PE Blend A** | **Material** | **Amount (wt %)** | **Density (g/cm³)** |
|---|---|---|---|
| | VLDPE | 60% | 0.911 |
| | LDPE | 40% | 0.924 |

| **PE blend B** | **Material** | **Amount (wt %)** | **Density (g/cm³)** |
|---|---|---|---|
| | VLDPE | 60% | 0.911 |
| | LDPE | 24.5% | 0.924 |
| | MB white | 12% | 1.51 |
| | MB slip | 3.5% | 0.930 |

### Example 2

### Preparation of the multilayer mono-material PE assembly of the invention

A film of high density polyethylene having a density value equal to or higher than 0.935 g/cm³, specifically a mono oriented HDPE layer, mainly oriented in the axial direction with MDO technology, having a density of 0.951 g/cm³ and having a thickness of 30µm was provided. The specific HDPE was available on the market, from the Supplier "Termoplast" with code "Crystal PE EX" product.

The HDPE had a corona treated surface with surface tension ≥ 38 dynes/cm prepared for the anchoring of printing inks and a plain surface with surface tension ≤ 32 dynes/cm. Said film had the following mechanical characteristics, calculated according to ASTM D882:
- Elastic modulus: 500 ÷ 2500 MPa; and
- Load at breakage: 40 ÷ 80 N/15mm.

The multilayer mono-material PE assembly was prepared by using an extrusion coating plant as generically represented in Figure 1.

With reference to Figure 1, the HDPE film, was wound on a reel and placed on the unwinder of an extrusion coating plant. Through a series of "film guide" rollers the HDPE film was conveyed to the core of an extrusion coating plant, i.e. the extrusion group. The latter, represented in detail also in Figure 2, comprised an extruder A, an extruder B, a feed block, an extrusion flat die and a Chill roll - Nip roll unit.

The PE blend A and the PE blend B of Example 1 have been uploaded separately into two screw extruders, namely Extruder A and Extruder B, and conveyed through a feed block to the flat die, from which an extrudate made of two sublayers (sublayer A and sublayer B) came out and was poured directly on the HDPE film, thus obtaining a PE assembly comprising a second layer made of two sublayers, from blend A and blend B, respectively.

The following Table 3 represents the setting parameters of the extrusion group:

**Table 3**

| **Experimental parameters** | **Values** | |
|---|---|---|
| Extrusion line speed | 100 m/min | |
| Extruder A coating weight | 10 g/m² | |
| Extruder B coating weight | 20 g/m² | |
| extrusion group position (Air-gap) | 245 mm | |
| feed block temperature | 280°C | |
| die temperature | 280-300 °C | |
| Chill-Roll calender temperature | 15 °C | |
| Chill-Roll calender pressure | 2 bar (1.974 atm) | |
| offset position | -25 mm | |
| Temperature profile for the extruder A and extruder B | 1 step | 190°C, |
| | 2 step | 200°C, |
| | 3 step | 210°C, |
| | 4 step | 220°C, |
| | 5 step | 230°C, |
| | 6 step | 240°C, |
| | 7 step | 260°C, |
| | 8 step | 280°C, |
| | 9 step | 280°C, |
| | 10 step | 280°C |

The HDPE first layer received the casting of extrusion on its plain surface and, by means of a calendaring system, consisting in applying a mutual pressure between two rolls, named Chill roll- Nip roll and represented both in Figures 1 and 2, it was cooled down at room temperature with a pressure of 2 bar (1.974 atm), thus obtaining the multilayer mono-material PE assembly of the invention.

This multilayer mono-material PE assembly had a final grammage of 58.5 g/m² ± 2.0g/m².

### Example 3

### Preparation of the multilayer mono-material PE assembly of the invention

The same materials and procedure as detailed in Example 2 was followed, but a step of printing the HDPE film was done before the preparation of the multilayer mono-material PE assembly

Specifically, the HDPE film has previously been treated with a printing process "in line", thus printing polyurethane inks, such as VarioLam AE series by Flint Group Italia S.p.A., and a PVB based overprint varnish. The HDPE used was then a printed HDPE film.

The multilayer mono-material PE assembly was hence prepared by using an extrusion coating plant as generically represented in Figure 1.

With reference to Figure 1, the HDPE film, thus externally printed, was processed as in example 2.

The HDPE first layer received the casting of extrusion on its plain surface and, by means of a calendaring system, consisting in applying a mutual pressure between two rolls, named Chill roll- Nip roll and represented both in Figures 1 and 2, it was cooled down at room temperature with a pressure of 2 bar (1.974 atm), thus obtaining the multilayer mono-material PE assembly of the invention, as shown in Figure 3D.

The first layer of the obtained multilayer mono-material PE assembly had a melting point of 130°C-140°C and the second layer of 100-120 °C as measured with conventional techniques, specifically with DSC (Differential Scanning Calorimetry) model 4000 of Perkin Elmer.

This multilayer mono-material PE assembly had a final grammage of 60.0g/m² ± 2.0g/m².

### Example 4

### Comparison example

A PE blend with linear low-density polyethylene (LLDPE) in place of very low-density polyethylene (VLDPE) of the blend of the invention was prepared. Specifically, the following raw materials have been provided:

**Table 4**

| **Material** | **Density (g/cm³)** | **Supplier** | **Product Code** |
|---|---|---|---|
| **LDPE** | 0.924 | Ineos | 23L430 |
| **LLDPE** | 0.916 | Dow | Elite 5230G |
| **MB white** | 1.51 | Ampacet | 110317 |
| **MB slip** | 0.940 | Constab | SAB 06569 LD |

| | | | |
|---|---|---|---|
| *MB white was a TiO₂ masterbatch ** MB slip was a slip agent | | | |

Two different PE blends, namely PE blend A for Extruder A and PE blend B for Extruder B, have been provided as in Example 1 and reported in Table 5.

**Table 5**

| **PE blend A for Extruder A** | **Material** | **Amount (wt %)** | **Density (g/cm³)** |
|---|---|---|---|
| | LDPE | 60% | 0.924 |
| | LLDPE | 40% | 0.916 |

| **PE blend B for Extruder B** | **Material** | **Amount (wt %)** | **Density (g/cm³)** |
|---|---|---|---|
| | LDPE | 56% | 0.924 |
| | LLDPE | 30% | 0.916 |
| | MB bianco | 12% | 1.51 |
| | MB slip | 2% | 0.930 |

A multilayer mono-material PE assembly was then prepared according to Example 2 in the coating extrusion plant of Figure 1 and having the extrusion group of Figure 2.

The following Table 6 represents the setting parameters of the extrusion group:

**Table 6**

| **Experimental parameters** | **Values** | |
|---|---|---|
| Extrusion line speed | 200 m/min | |
| Extruder A coating weight | 12 g/m² | |
| Extruder B coating weight | 18 g/m² | |
| extrusion group position (Air-gap) | 245 mm | |
| feed block temperature | 315 °C | |
| die temperature | 315 °C | |
| Chill-Roll calender temperature | 25 °C | |
| Chill-Roll calender pressure | 4 bar (3.948 atm) | |
| offset position | 0 mm | |
| Temperature profile for the extruder A and extruder B | 1 step | 240°C, |
| | 2 step | 260°C, |
| | 3 step | 280°C, |
| | 4 step | 300°C, |
| | 5 step | 310°C, |
| | 6 step | 310°C |
| | 7 step | 310°C, |
| | 8 step | 310°C, |
| | 9 step | 310°C |
| | 10 step | 310°C |

The multilayer mono-material PE assembly was then obtained as in Example 2 and named as comparative multilayer mono-material PE assembly 1.

The same raw materials of Table 4 were used for preparing the Blend A and Blend B as in Table 5 and another comparative multilayer mono-material PE assembly 2 was prepared by following the setting parameters of the extrusion group reported in Table 7.

**Table 7**

| **Experimental parameters** | **Values** | |
|---|---|---|
| Extrusion line speed | 150 m/min | |
| Extruder A coating weight | 12 g/m² | |
| Extruder B coating weight | 18 g/m² | |
| extrusion group position (Air-gap) | 245 mm | |
| feed block temperature | 280 °C | |
| die temperature | 280-300 °C | |
| Chill-Roll calender temperature | 15 °C | |
| Chill-Roll calender pressure | 4 bar (3.948 atm) | |
| offset position | 0 mm | |
| Temperature profile for the extruder A and extruder B | 1 step | 190°C, |
| | 2 step | 200°C, |
| | 3 step | 210°C, |
| | 4 step | 220°C, |
| | 5 step | 230°C, |
| | 6 step | 240°C |
| | 7 step | 260°C, |
| | 8 step | 280°C, |
| | 9 step | 280°C |
| | 10 step | 280°C |

The multilayer mono-material PE assembly of the example 3 was then compared with the comparative mono-material PE assemblies. All the three PE assemblies contained two sublayers in the second layer.

The comparative multilayer mono-material PE assembly 1 showed remarkable problems of dimensional stability with evident shortening of the width of the HDPE film, reaching even 10% of the total width.

The comparative multilayer mono-material PE assembly 2 showed less problems of dimensional stability with less shortening of the width of the HDPE film, reaching 3% of the total width with respect to the comparative multilayer mono-material PE assembly 1.

The multilayer mono-material PE assembly of the example 3 showed no problems of dimensional stability with no remarkable shortening of the width of the HDPE film.

The three multilayer mono-material PE assemblies were also compared for the adhesion properties that render them suitable for packaging application, for example packaging with Form, Fill and Seal Machines.

The adhesion between the first and the second layer of the multilayer mono-material PE assembly tested was defined acceptable if the adhesion force resulted in a value higher than 1.2 N/15mm (as measured with a test peeling at 90° by using a dynamometer Instron model 3365 (ASTM F904:98 (2003)).

The comparative multilayer mono-material PE assembly 1 could not be tested for adhesion due to the severe shortening of the HDPE film.

The adhesion of the comparative multilayer mono-material PE assembly 2 was 0.8-1 N/15mm (as measured with a test peeling at 90° by using a dynamometer Instron model 3365 (ASTM F904:98 (2003)) that was considered unacceptable for the final application.

The multilayer mono-material PE assembly prepared as in Example 2 and having as a second layer of the invention, showed remarkable adhesion properties of the second layer on the first layer made of HDPE, specifically showing values higher than 2.0 N/15mm.

The presence in the second layer of a polyethylene component selected from the group consisting of a very low-density polyethylene and an ultra low-density polyethylene and having a density value ≤ 0.912 g/cm³, preferably very low-density polyethylene (VLDPE) allowed thus, to improve the adhesion properties.

The multilayer mono-material PE assembly of the invention was hence not only recyclable, but meets all the technical requirements for the final application in packaging.

### Example 5

### Differential scanning calorimetry (DSC) of a multilayer mono-material PE assembly of the invention

The assembly of multi-layer mono-material PE of the invention was placed for thermal analysis by differential scanning calorimetry (DSC).

In Figure 4 a thermogram obtained by a differential scanning calorimetry (measured with DSC 4000 Model of Perkin Elmer) of the final multilayer mono-material PE assembly of the invention, as prepared in Example 3 and shown in Figure 3D, is reported.

The thermogram was recorded at a rate of 5°C/min in air atmosphere.

Three peaks can be observed, and they represent the melting points of the materials contained in the specific blend analyzed. The peak at 107 °C has been assigned to second layer and 128 and 130 °C to the first layer such as HDPE polymer.

These peaks demonstrate that, even though the multilayer contained different PE, having the same chemical nature, the final assembly degraded at a very narrow range of temperatures. This meant that the multilayer PE assembly of the invention can be easily recycled.

### Example 6

### Comparison of the mechanical properties of a multilayer mono-material PE assembly of the invention with respect to a prior art multilayer multi-material PE assembly

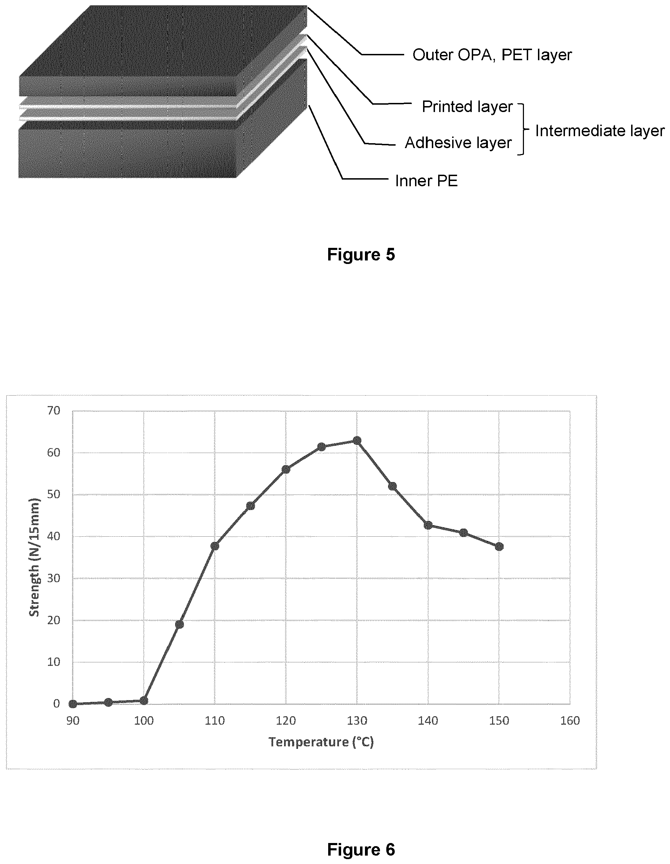

A multilayer mono-material PE assembly of the invention, having a first layer of 30 µm thickness and prepared according to Example 3 was compared for mechanical properties with a prior art multilayer multi-material assembly as shown in Figure 5.

The prior art multilayer contained a first layer of 12 µm OPA + 55 µm PE, an intermediate layer of adhesive system and an inner layer of PE.

Both the multilayer assemblies were tested for mechanical properties, specifically Elastic Modulus Yield Strength, Load at Break and Elongation at Break according to ASTM 882.

The dynamometric measurement was carried out with Dynamometer Instron Modello 3365

In Table 8 dynamometric measurement values are reported:

**Table 8**

| MULTILAY ER | MEASUREMENT DIRECTION | ELASTIC MODULUS (MPa) | YIELD STREGTH (MPa) | LOAD AT BREAK (N/15mm) | ELONGATI ON AT BREAK (%) |
|---|---|---|---|---|---|
| mono-material PE assembly of the invention HDPE 30µm + PE/ext 30g/m² | MD (machine direction) | 630 | 16 | 72 | 91 |
| | TD (transverse direction) | 900 | 10 | ≥ 40 | ≥ 300 |
| prior art multi-material film OPA 12µm + PE 55µm | MD (machine direction) | 560 | 13 | 58 | 78 |
| | TD (transverse direction) | 680 | 11 | 49 | 74 |

From Table 8 it is evident that, the multilayer mono-material PE assembly of the invention showed comparable or even better mechanical properties, with respect to the known prior art multilayer multi-material layer assembly, being therefore more flexible and resistant.

### Example 7

### Comparison of the seal strength of a multilayer mono-material PE assembly of the invention with respect to a prior art multi-material assembly

A multilayer mono-material PE assembly of the invention, prepared according to Example 3 and shown in Figure 3D, has been compared with a prior art multilayer multi-material assembly shown in Figure 5. The prior art multilayer contained a first layer of 12 µm OPA + 55 µm PE, an intermediate layer of adhesive system and an inner layer of PE.

The resistance of the weld, specifically the seal strength, was evaluated according to ASTM F88 under the experimental conditions summarized in Table 9:

**Table 9**

| | |
|---|---|
| Sealing pressure | 4 bar (4 atm) |
| Sealing time | 0.2 s |
| Rate of grip separation | 50 mm/min |
| Sealing Temperature range | 90 -150 ° C |

The results obtained by the test are summarized in Table 10.

**Table 10**

| MULTILAYERS TESTED | Operative Conditions | Seal Strength (N/15mm) |
|---|---|---|
| Multilayer mono-material PE assembly of the invention | 120 °C for 0.2s | 63 |
| prior art multi-material | 150 °C for 1s | 60 |

Figure 6 represents the results of the test of the multilayer of the invention.

From Table 10 it is evident that, the multilayer mono-material PE assembly of the invention showed comparable resistance of the weld properties, with respect to the known prior art multi-material assembly, being well known as resistant and protective material.

### Example 8

### Comparison of the Coefficient of Friction of a multilayer mono-material PE assembly of the invention with respect to a prior art multilayer multi-material assembly

Slipperiness COF (Coefficient of Friction) measurements were carried out with the aim of guaranteeing good runnability on vertical packaging machines, according to ASTM D1894.

The COF (Coefficient of Friction) was measured as internal/internal friction coefficient with Friction Peel Tester model 225 of Rycobel.

Acceptable values were considered comprised in the range from 0.10 and 0.25.

The multilayer mono-material PE assembly of the invention as prepared in Example 3 showed dynamic COF values int/int of 0.15 - 0.20, therefore highly compliant to ensure runnability on VFFS vertical packaging machines.

### Example 9

### Packaging test of a multilayer mono-material PE assembly of the invention

The multilayer mono-material PE assembly of the invention, prepared according to Example 3 and shown in Figure 3D, was tested on the "Form Fill & Seal" packaging machines of the Comet series from PFM manufacturer.

Said packaging machine was chosen for the test, since it has a very effective sealing system for multilayer films, but it is also extremely thermally stressful for multilayer mono-material PE assembly of the invention. In fact, the "Long Dwell" rotary system with a straight section of the machine causes a long contact of the multilayer assembly with the sealing bars and therefore with the heat source. This more easily can trigger the softening of the coupled structure of the multilayer assembly.

Specifically, the test consisted in packaging of a single piece of mozzarella with the multilayer mono-material PE assembly of the invention. The packaging was carried out by using the same machine condition as normally used for a single piece of mozzarella packed with a prior art multilayer multi-material assembly having layers of OPA 15µm + PE 45 µm as represented in Figure 5.

The machine conditions used for the test were as in following Table 11:

**Table 11**

| **Machine conditions** | **Values** |
|---|---|
| Packaging speed | 100 - 110 packs / min |
| Transversal bar temperatures | 110 - 130 °C |
| Longitudinal bar temperatures | 110 - 130 °C |

Under these operating conditions it was possible to carry out a complete packaging test and to verify the integrity of the packages obtained.

The multilayer mono-material PE assembly of the invention showed to resist and adapt to "Form Fill & Seal" packaging machines.

The final package met the requirements of the food field for this kind of packaging.

This confirmed that the multilayer mono-material PE assembly of the invention was immediately marketable without the need for long and expensive investments to change the machinery available on the marked and already used for food packaging.

## Claims

1. A multilayer mono-material PE assembly, comprising at least two layers:
- a first layer comprising at least one film of high-density polyethylene having a density value equal to or higher than 0.935 g/cm³, and
- a second layer comprising at least one sublayer comprising a polyethylene (PE) blend, each PE blend comprising with respect to the total amount of each sublayer:
- from 0 to 85 wt% of polyethylene resin having a density value in the range from 0.914 to 0.930 g/cm³,
- at least 15 wt% of a polyethylene component selected from the group consisting of
i) a very low-density polyethylene (VLDPE) and/or an ultra low-density polyethylene (ULDPE) and having a density value ≤ 0.912 g/cm³,
ii) a polyethylene copolymer selected from the group consisting of polyolefin plastomer (POP) EVA, EAA, EBA, EEA, EEHA and EMAA, wherein the ethylene monomer is higher than or equal to 50 wt% and
iii) a mixture of i) and ii).

2. The multilayer mono-material PE assembly according to claim 1, wherein the difference of the melting point (ΔTₘ) of the first layer with respect to the second layer is in the range from 5 to 80°C, preferably from 10 to 50°C.

3. The multilayer mono-material PE assembly according to claim 1 or claim 2, wherein the second layer can further comprise an additive selected from a colouring agent, a coloured masterbatch, a TiO₂ masterbatch, a slip agent, an antifogging agent, UV-barrier additive and mixture thereof, preferably in the total amount from 1 to 20% wt with respect to the total weight of the sublayer.

4. The multilayer mono-material PE assembly according to anyone of claims 1-3, wherein the second layer comprises from 2 to 31 sublayers, which are equal or different with respect to each other.

5. The multilayer mono-material PE assembly according to anyone of claims 1-4, wherein in the sublayer of the second layer the polyethylene resin having a density value in the range from 0.914 to 0.930 g/cm³, is LDPE having a density of 0.924 g/cm³, preferably in an amount from 24 to 40 % wt.

6. The multilayer mono-material PE assembly according to anyone of claims 1-5, wherein in the sublayer of the second layer, the polyethylene component is very low-density polyethylene (VLDPE), preferably in an amount higher than 60 wt%.

7. The multilayer mono-material PE assembly according to anyone of claims 1-6, wherein the mono-material polyethylene assembly further comprises at least one third layer that is a printed layer and/or a varnish layer and/or a metallized layer, being the at least one third layer placed on the first layer and/or between the first and the second layer.

8. The multilayer mono-material polyethylene assembly according to any one of Claims 1-7, wherein a further material selected from the group consisting of EVOH (Ethylene vinyl alcohol), PVOH (polyvinyl alcohol), PVDC (polyvinylidene chloride), a SiO₂ based ceramic material, a Al₂O₃ based ceramic material, a SiO₂/Al₂O₃ based ceramic material, a metallization material and a gas barrier material, is present independently in the first layer or in the second layer as a further sublayer or it is present in the further third layer and wherein said further material is present in the final multilayer mono-material PE assembly of the invention in an amount not more than 10%, preferably 5%, more preferably 3% wt with respect to the total amount of the final PE assembly

9. The multilayer mono-material PE assembly according to claim 7 wherein the at least one third layer is a varnish layer, preferably having a heat resistance equal to or higher than 180 °C.

10. The multilayer mono-material PE assembly according to any one of Claims 1 to 9, wherein it has a thickness of at most 250 µm.

11. The multilayer mono-material PE assembly according to any one of Claims 1 to 10, wherein an adhesive system is absent.

12. A process for preparing the multilayer mono-material PE assembly according to any one of Claims 1 to 11 comprising the steps of:
a) providing a first layer comprising at least one film of high-density polyethylene having a density value equal to or higher than 0.935 g/cm³;
b) providing an extrusion group, said extrusion group comprising at least one extruder, a feed block, an extrusion flat die and a Chill roll - Nip roll unit;
c) placing the first layer on the Chill roll - Nip roll unit;
d) loading in the at least one extruder at least one polyethylene (PE) blend, said PE blend comprising
- from 0 to 85 wt% of polyethylene resin having a density value in the range from 0.914 to 0.930 g/cm³,
- at least 15 wt% of a polyethylene component selected from the group consisting of
i) a very low-density polyethylene (VLDPE) and/or an ultra low-density polyethylene (ULDPE) and having a density value ≤ 0.912 g/cm³,
ii) a polyethylene copolymer selected from the group consisting of polyolefin plastomer (POP), EVA, EAA, EBA, EEA, EEHA and EMAA, wherein the ethylene monomer is higher than or equal to 50% wt and
iii) a mixture of i) and ii) and
optional additives;
e) extruding the at least one PE blend on the first layer through the extrusion flat die of the extrusion group, thus obtaining a mono-material polyethylene multilayer having the second layer comprising at least one sublayer comprising at least one polyethylene blend (PE),
f) quenching the mono-material polyethylene multilayer, thus obtaining the multilayer mono-material PE assembly,
wherein the setting parameters of the extrusion group were:
- a line speed of about 50-250 m/min,
- at least one extrusion coating weight of about 5-50 g/m²,
- a temperature profile of the at least one extruder from 170°C to 300°C and
the quenching step is a cooling step from 300°C to 15°C.

13. The process according to claim 12, wherein step d) comprises at least two extruders, Extruder (A) and Extruder (B), wherein
- in the extruder A a PE blend A is loaded and comprises 60 wt% of a very low-density polyethylene (VLDPE) and having a density value ≤ 0.912 g/cm³ and 40 wt% of a polyethylene resin having a density value in the range from 0.914 to 0.930 g/cm³ and
- in the extruder B a PE blend is loaded and comprises 60 wt% of a very low-density polyethylene (VLDPE), 24.5 wt% of a polyethylene resin having a density value in the range from 0.920 to 0.930 g/cm³, 12 wt% of the additive TiO₂ masterbatch and 3.5 wt% of additive slip agent.

14. A multilayer mono-material PE assembly according to any one of Claims 1-10 obtainable by the process according to any one of Claims 12-13.

15. A use of the multilayer mono-material PE assembly according to any one of Claims 1-11 in the packaging field.

16. The use according to claim 15, wherein the multilayer mono-material PE assembly is used in a packaging machine for packing goods.

17. The use according to claim 16, wherein the goods are food.
